# FASCICULE DE BREVET EUROPEEN

(11) **EP 2 654 913 B1**
(45) Date de publication et mention de la délivrance du brevet: **16.02.2022**
(21) Numéro de dépôt: 11815513.4
(22) Date de dépôt: 22.12.2011
(51) Int. Cl.: B01D 3/32, B01D 5/00, B01D 53/00, F25J 3/02

(54) **PROCÉDÉ ET APPAREIL DE CONDENSATION D'UN PREMIER FLUIDE RICHE EN DIOXYDE DE CARBONE À L'AIDE D'UN DEUXIÈME FLUIDE**
VERFAHREN UND VORRICHTUNG ZUR KONDENSATION EINER ERSTEN KOHLENDIOXIDREICHEN FLÜSSIGKEIT MITTELS EINER ZWEITEN FLÜSSIGKEIT
METHOD AND DEVICE FOR CONDENSING A FIRST FLUID RICH IN CARBON DIOXIDE USING A SECOND FLUID

(30) Priorité: 23.12.2010 FR 1061158
(43) Date de publication de la demande: 30.10.2013
(73) Titulaire: L'Air Liquide Société Anonyme pour l'Etude et l'Exploitation des Procédés Georges Claude, 75007 Paris (FR)
(72) Inventeur: LESTRADE, Michel, 92410 Ville d'Avray (FR); RIVOAL, Fabrice, 94400 Vitry Sur Seine (FR)
(74) Mandataire: Air Liquide
(86) Numéro de dépôt international: PCT/FR2011/053142
(87) Numéro de publication internationale: WO 2012/085471

(56) Documents cités:
- EP-A1- 1 026 463
- EP-A2- 0 137 744
- WO-A1-2009/061268
- US-A- 2 916 888
- US-A- 4 303 427
- US-A- 4 762 543
- US-A1- 2007 234 750

## Description

La présente invention concerne un procédé et appareil de condensation d'un premier fluide riche en dioxyde de carbone à l'aide d'un deuxième fluide

Plus particulièrement, la présente invention concerne le domaine de la condensation d'un premier fluide, dit calorigène, riche en dioxyde de carbone (CO₂), contenant au moins 50% mol. de dioxyde de carbone, voire au moins 80% mol. de dioxyde de carbone, par évaporation d'un deuxième fluide, dit frigorigène, par exemple de l'ammoniac (NH₃). Cette condensation est réalisée dans un échangeur de chaleur.

Le fluide frigorigène vaporisé est ensuite envoyé dans un équipement aval, par exemple un autre échangeur de chaleur, ou une aspiration d'un compresseur ou d'un étage de compression du cycle frigorifique, en vue d'être ensuite lui-même refroidi et condensé à plus haute pression pour un nouveau cycle.

Il est important dans ce cas de limiter la portion liquide du deuxième fluide en sortie du premier échangeur de chaleur, pour éviter selon le cas par exemple une maldistribution dans l'échangeur suivant, ou des problèmes mécaniques dans le compresseur.

De manière générale, le fluide frigorigène est en général fourni liquide, à une pression supérieure à la pression d'utilisation dans l'échangeur. Il peut être plus ou moins sous-refroidi, mais sa détente jusqu'à la pression d'utilisation provoque généralement une vaporisation partielle (dite « flash » en anglais) plus ou moins importante.

EP1026463 et US4762543 décrivent un procédé de condensation d'un fluide riche en dioxyde de carbone sans étape de séparation de phases préliminaire.

US4303427 décrit un circuit de refroidissement fermé pour liquéfier du gaz naturel.

US2007/234750 décrit un procédé de liquéfaction qui n'explique pas si le liquide utilisé comme réfrigérant est vaporisé.

WO2009/061268 décrit un procédé de liquéfaction où le pourcentage du deuxième fluide qui est vaporisé est bien inférieur à 100%.

Le procédé de la présente invention utilise un séparateur de phases d'une construction simple et opère avec une perte de charge réduite dans la ligne de gaz vaporisé provenant de l'échangeur de chaleur.

Un procédé selon le préambule de la revendication 1 est connu de EP137744 pour liquéfier un fluide ne contenant pas de dioxyde de carbone.

Selon un objet de l'invention, il est prévu un procédé selon la revendication 1.

Selon d'autres aspects facultatifs :
- le deuxième fluide est détendu et envoyé entièrement à l'étape de séparation de phases.
- le deuxième fluide a une composition chimique différente du premier fluide et éventuellement ne contient pas de dioxyde de carbone
- le deuxième fluide est chauffé dans l'échangeur de chaleur après sa vaporisation pour former un gaz surchauffé.
- le premier fluide provient au moins en partie de la tête d'une colonne de distillation et le premier fluide condensé est renvoyé à la tête de la colonne de distillation.
- une première fraction gazeuse riche en dioxyde de carbone provenant de la tête de la colonne de distillation est mélangée avec une deuxième fraction gazeuse riche en dioxyde de carbone pour former le premier fluide.
- le rapport entre le volume total du deuxième fluide dans le séparateur de phases et le débit du deuxième fluide à l'entrée du séparateur de phases est compris entre 0,01 et 0,05 L.h/Nm³ , voire entre 0,012 et 0,047 L.h/Nm³.
- le rapport entre le volume de la portion liquide du deuxième fluide dans le séparateur de phases et le débit du deuxième fluide à l'entrée des moyens de séparation est compris entre 0,005 et 0,03 L.h/Nm³, voire entre 0,006 et 0,023 L.h/Nm³.
- le rapport entre la capacité de l'échangeur de chaleur et le débit du deuxième fluide à l'entrée du séparateur de phases est compris entre 0,13 et 0,55 L.h/Nm³, voire entre 0,137 et 0,547 L.h/Nm³.
- le deuxième fluide est l'ammoniac.

Selon un autre objet de l'invention, il est prévu un appareil selon la revendication 10.

Le fait de vaporiser totalement le deuxième fluide, sans laisser de liquide, permet de se dispenser de séparer le deuxième fluide à la sortie de l'échangeur dans le pot séparateur pour enlever le liquide. La taille du pot séparateur est ainsi réduite. Ainsi l'échangeur n'a pas de sortie du deuxième fluide sous forme liquide.

L'appareil peut comprendre une première conduite d'amenée d'une première fraction gazeuse riche en dioxyde de carbone provenant de la colonne et une deuxième conduite d'amenée d'une deuxième fraction gazeuse riche en dioxyde de carbone ne provenant pas de la colonne, les première et deuxième conduites étant reliées par des moyens de mélange en dehors de la colonne pour former le premier fluide à envoyer à l'échangeur de chaleur.

De préférence, il n'y a pas de moyens de refroidissement entre la sortie du deuxième fluide au moins partiellement vaporisé de l'échangeur de chaleur et le séparateur de phases ou la conduite de la portion gazeuse provenant du séparateur de phases.

De préférence, il n'y a pas de moyens de compression entre la sortie du deuxième fluide au moins partiellement vaporisé de l'échangeur de chaleur et le séparateur de phases ou la conduite de la portion gazeuse provenant du séparateur de phases.

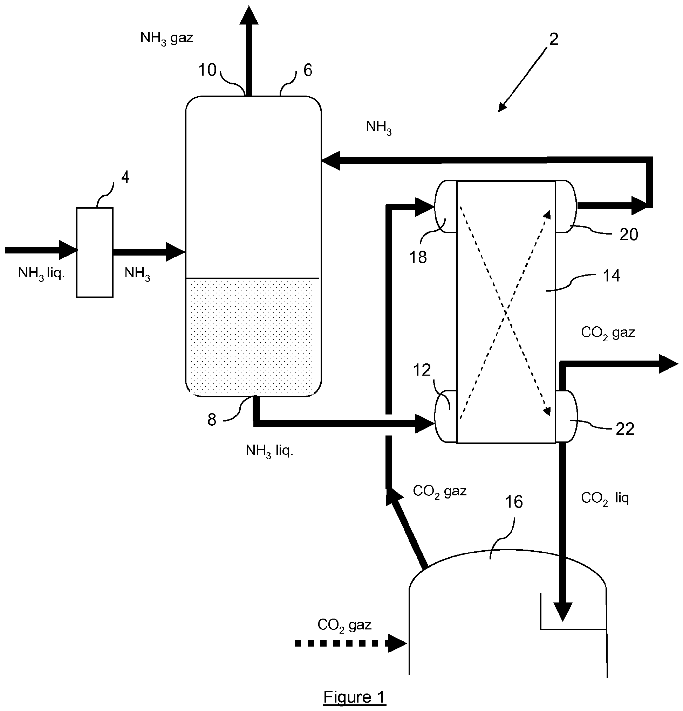

Ce procédé, qui convient notamment lorsque le gradient de température est faible, consiste à n'utiliser que la partie liquide du fluide frigorigène après détente, en établissant un thermosiphon entre un pot séparateur, placé en amont de l'échangeur de chaleur, et l'échangeur de chaleur lui-même (figure 1).

Le pot séparateur sert alors à la fois de séparateur d'entrée, pour séparer la portion gazeuse générée par la détente du fluide frigorigène de la portion liquide correspondante, et de séparateur de sortie pour séparer la vapeur générée par l'échange thermique dans l'échangeur de l'excès de liquide en recirculation. Cela implique d'avoir un pot séparateur de taille relativement grande de sorte que la quantité de fluide frigorigène présente dans l'installation est importante.

Or, compte tenu à la fois du coût du fluide frigorigène et des réglementations locales, on cherche en général à limiter la quantité du fluide frigorigène dans l'installation.

Une première amélioration consiste à diminuer cette quantité de fluide frigorigène en effectuant directement une vaporisation à sec de ce fluide dans l'échangeur au lieu d'établir un thermosiphon.

Le fluide frigorigène est, dans ce cas, introduit directement en diphasique dans l'échangeur, sans pot séparateur, et en quantité limitée en vue d'avoir une vaporisation totale de la portion liquide, la vapeur générée sortant au moins en partie surchauffée. Cette surchauffe est néanmoins limitée par la température d'entrée du fluide calorigène, un écart de température devant être maintenu entre les deux fluides pour assurer l'échange thermique.

Or l'écart de température entre les deux fluides est généralement limité pour des raisons énergétiques, la pression du fluide frigorigène devant rester la plus élevée possible pour diminuer le taux de compression du compresseur du cycle frigorifique.

Dans le cas où le fluide calorigène est une vapeur en équilibre liquide-vapeur, la possibilité de surchauffe du fluide frigorigène se trouve alors très limitée.

De plus l'introduction directe d'un fluide diphasique dans un échangeur est délicate, qu'il s'agisse d'un échangeur tubulaire ou d'un échangeur compact, et de ce fait le risque de maldistribution est élevé, entraînant un mauvais fonctionnement de l'échangeur pouvant conduire à une vaporisation incomplète du liquide frigorigène et donc à l'apparition de gouttelettes de liquide à l'entrée de l'équipement aval, ce qui est contraire au but visé.

Un aspect particulier de la présente invention vise à améliorer la situation.

A cet effet, une variante de la présente invention produit le deuxième fluide surchauffé suite à l'échange de chaleur avec le premier fluide.

Un gaz surchauffé résulte de la vaporisation d'un liquide. En chauffant le liquide au-delà de la température d'ébullition, on obtient un gaz surchauffé.

Cet aspect de l'invention permet d'éviter d'avoir à introduire le deuxième fluide sortant de l'échangeur dans un thermosiphon. Il permet aussi d'éviter les inconvénients de la vaporisation à sec. Ceci tout en assurant une circulation du deuxième fluide vers l'aval intégralement sous phase vapeur. Il n'y a ainsi aucun risque de perturber l'équipement aval.

Avantageusement, les moyens de séparation de phases sont configurés pour assurer une séparation de phases entre une fraction liquide et une fraction gazeuse dudit deuxième fluide, provenant uniquement d'une détente de ce dernier.

Autrement dit, ces moyens de séparation se présentent, de préférence, sous la forme d'un petit pot séparateur dimensionné uniquement pour séparer de la portion liquide de la vapeur générée par une détente du fluide frigorigène.

A ce sujet, selon une caractéristique, l'appareil comprend, en amont des moyens de séparation, des moyens de détente du deuxième fluide, prévu à l'état liquide. Le pot séparateur est alors dimensionné pour séparer la portion liquide de la vapeur générée par ladite détente du deuxième fluide.

Avantageusement, l'appareil comprend en outre des moyens de mélange de la portion gazeuse dudit deuxième fluide obtenue en sortie des moyens de séparation avec le deuxième fluide surchauffé obtenu en sortie des moyens d'échange de chaleur.

Ces moyens de mélange sont situés en aval du pot séparateur pour ne pas intervenir sur son dimensionnement. Compte tenu de l'importante différence de débit, le mélange de vapeur résultant reste globalement surchauffé.

Selon une caractéristique, le rapport entre le volume total du deuxième fluide dans les moyens de séparation de phases et le débit du deuxième fluide à l'entrée des moyens de séparation est compris entre 0,01 et 0,05 L.h/Nm³, de préférence entre 0,012 et 0,047 L.h/Nm³ (ici et dans la suite, L signifie litre, h heure, Nm³ normal mètre cube - à titre d'exemple, la densité de l'ammoniac étant de 0,76 kg/Nm³, 0,76 kg d'ammoniac correspond à 1 Nm³ d'ammoniac).

Selon une autre caractéristique, le rapport entre le volume de la portion liquide du deuxième fluide dans les moyens de séparation de phases et le débit du deuxième fluide à l'entrée des moyens de séparation est compris entre 0,005 et 0,03 L.h/Nm³, de préférence entre 0,006 et 0,0023 L.h/Nm³.

Selon encore une autre caractéristique, le rapport entre la capacité des moyens d'échange de chaleur et le débit du deuxième fluide à l'entrée des moyens de séparation est compris entre 0,13 et 0,55 kW.h/Nm³, de préférence entre 0,137 et 0,547 kW.h/Nm³ (ici et dans la suite kW signifie kilo watt).

Selon une réalisation préférée, l'appareil comprend des moyens formant colonne de distillation du premier fluide, les dits moyens étant configurés pour fournir le premier fluide à l'état gazeux aux moyens d'échange de chaleur et pour recevoir des moyens d'échange de chaleur la portion liquide du premier fluide.

Cette réalisation correspond au cas dans lequel l'échangeur de chaleur joue le rôle de condenseur de tête de colonne souvent désigné sous le terme de liquéfacteur du fluide calorigène.

Avantageusement, dans ce cas, l'appareil comprend, en amont des moyens d'échange de chaleur, des moyens de mélange d'une première fraction du premier fluide à l'état gazeux, fourni par les moyens formant colonne de distillation, et d'une autre fraction du premier fluide prévue également à l'état gazeux.

De préférence l'autre fraction du premier fluide à l'état gazeux est surchauffée. Cette surchauffe du fluide calorigène permet d'augmenter la surchauffe du fluide frigorigène en sortie des moyens d'échange de chaleur. Cela résulte en une diminution du débit de fluide frigorigène.

De préférence, le premier fluide est du dioxyde de carbone (CO₂) et le deuxième fluide est de l'ammoniac (NH₃).

On va maintenant décrire des exemples de réalisation de l'invention de façon plus précise, mais non limitative, en regard des dessins annexés sur lesquels :
- la figure 1 illustre un procédé de condensation d'un fluide riche en dioxyde de carbone;
- la figure 2 illustre la structure d'un appareil de condensation selon un premier mode de réalisation de l'invention ; et
- la figure 3 illustre la structure d'un appareil de condensation selon un deuxième mode de réalisation de l'invention.

Dans la suite de la description, le premier fluide, calorigène est du dioxyde de carbone (CO₂) et le deuxième fluide, frigorigène, est supposé être de l'ammoniac (NH₃). L'invention n'est cependant pas limitée à l'ammoniac comme deuxième fluide.

La figure 1 illustre la structure et le fonctionnement de l'appareil 2 mettant en œuvre un thermosiphon.

L'ammoniac est fourni à l'appareil 2 sous forme liquide, à une pression supérieure à la pression nécessaire pour condenser le dioxyde de carbone. Des moyens de détente 4 sont prévus pour détendre l'ammoniac jusqu'à la pression d'utilisation souhaitée. Cela provoque une vaporisation partielle de l'ammoniac.

L'ammoniac diphasique ainsi obtenu est fourni à l'entrée d'un pot séparateur 6. Le pot séparateur 6 est configuré pour séparer les phases de l'ammoniac et fournit, au niveau d'une première sortie 8, de l'ammoniac liquide, et au niveau d'une deuxième sortie 10, de l'ammoniac gazeux.

L'ammoniac gazeux obtenu au niveau de la deuxième sortie 10 est envoyé en aval vers la suite de la boucle pour frigorigène, non représentée.

L'ammoniac liquide obtenu au niveau de la sortie 8 est alors fourni à une première entrée 12 d'un échangeur de chaleur 14.

Dans l'exemple de la figure 1, l'échangeur de chaleur 14 est un déflegmateur utilisé en association avec une colonne de distillation 16 de dioxyde de carbone.

La colonne de distillation 16 fournit du dioxyde de carbone en phase vapeur à une deuxième entrée 18 de l'échangeur de chaleur 14.

Dans l'échangeur de chaleur 14, le refroidissement du dioxyde de carbone par l'ammoniac produit, au niveau d'une première sortie 20 de l'ammoniac diphasique et au niveau d'une deuxième sortie 22 du dioxyde de carbone.

La partie condensée, c'est-à-dire liquide, du dioxyde de carbone est fournie à la colonne de distillation 16.

L'ammoniac diphasique obtenu au niveau de la sortie 20 est retourné dans le pot séparateur 6 pour séparer ses phases liquide et vapeur.

Le pot séparateur 6 de l'état de la technique sert ainsi à la fois de séparateur d'entrée pour séparer la vapeur générée par la détente de l'ammoniac de la phase liquide correspondante et de séparateur de sortie pour séparer la vapeur générée par l'échange thermique dans l'échangeur 14 de l'excès d'ammoniac liquide en recirculation.

Cette double fonction implique d'utiliser un pot séparateur de taille importante de sorte que la quantité d'ammoniac présente dans l'appareil 2 est élevée, ce qui n'est pas souhaitable.

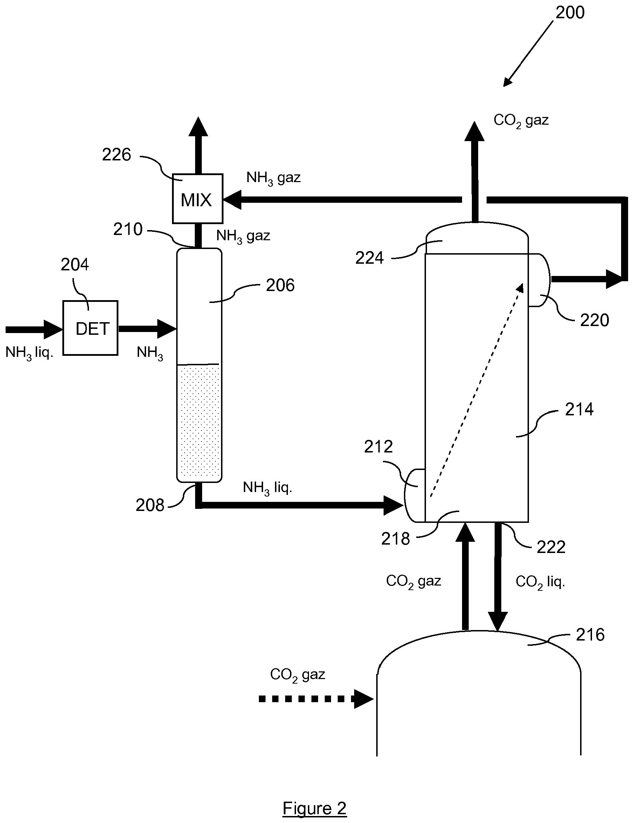

La figure 2 illustre une amélioration selon l'invention de l'appareil 2 de la figure 1. A cet effet, la figure 2 représente un appareil 200 pour la condensation du dioxyde de carbone par l'ammoniac.

L'ammoniac est fourni à l'appareil 200 sous forme liquide, à une pression supérieure à la pression nécessaire pour condenser le dioxyde de carbone. Des moyens de détente 204 sont prévus pour détendre l'ammoniac jusqu'à la pression d'utilisation souhaitée. Cela provoque une vaporisation partielle de l'ammoniac. Le débit de la portion gazeuse de l'ammoniac résultante constitue une petite fraction du débit total d'ammoniac.

L'ammoniac diphasique ainsi obtenu est fourni à l'entrée d'un pot séparateur 206. Le pot séparateur 206 est configuré pour séparer les phases de l'ammoniac et fournit, au niveau d'une première sortie 208, de l'ammoniac liquide, et au niveau d'une deuxième sortie 210, de l'ammoniac gazeux.

Selon un aspect de l'invention, le pot séparateur 216 est dimensionné uniquement pour réaliser cette séparation de l'ammoniac destiné à l'échangeur de chaleur. Le diamètre de ce pot 206 est fortement réduit par rapport au diamètre du pot 6 de la figure 1, étant donné que le débit de la portion gazeuse de l'ammoniac résultante constitue une petite fraction du débit total d'ammoniac. Ainsi, la quantité d'ammoniac stockée dans le pot 206 est très modeste par rapport à la quantité stockée dans le pot 6 de la figure 1.

Le rapport entre le volume total d'ammoniac dans le pot séparateur 206 et le débit d'ammoniac à l'entrée du pot séparateur 206 est compris entre 0,01 et 0,05 L.h/Nm³, de préférence entre 0,012 et 0,047 L.h/Nm³.

Le rapport entre le volume de la portion liquide d'ammoniac dans le pot séparateur 206 et le débit de l'ammoniac à l'entrée du pot séparateur 206 est compris entre 0,005 et 0,03 L.h/Nm³, de préférence entre 0,006 et 0,0023 L.h/Nm³.

L'ammoniac liquide obtenu au niveau de la sortie 208 est alors fourni à une première entrée 212 d'un échangeur de chaleur 214.

Dans l'exemple de la figure 2, l'échangeur de chaleur 214 est un déflegmateur utilisé en association avec une colonne de distillation 216 de dioxyde de carbone.

L'invention n'est cependant pas limitée à ce type d'échangeurs, l'échangeur 214 pouvant être, par exemple, un réfrigérant ou un condenseur à contre-courant ou à courant croisé, etc.

Grâce au dimensionnement du pot séparateur 206 selon l'invention, la quantité d'ammoniac liquide fournie à l'échangeur de chaleur 214 est limitée.

La colonne de distillation 216 fournit du dioxyde de carbone en phase vapeur à une deuxième entrée 218 de l'échangeur de chaleur 14.

Dans l'échangeur de chaleur 214, le refroidissement du dioxyde de carbone par l'ammoniac, en quantité limitée, produit, au niveau d'une première sortie 220 de l'ammoniac entièrement vaporisé et exclusivement surchauffé, au niveau d'une deuxième sortie 222 du dioxyde de carbone liquide et au niveau d'une troisième sortie 224 du dioxyde de carbone gazeux.

La partie condensée, c'est-à-dire liquide, du dioxyde de carbone est fournie à la colonne de distillation 216.

L'ammoniac surchauffé fourni au niveau de la sortie 220 est mélangé à l'ammoniac gazeux produit au niveau de la sortie 210 du pot séparateur 206 dans des moyens de mélange 226 avant d'être fourni, sous forme globalement surchauffée, à la suite de la boucle frigorigène.

Ainsi l'échangeur 214 n'a pas de sortie du deuxième fluide sous forme liquide.

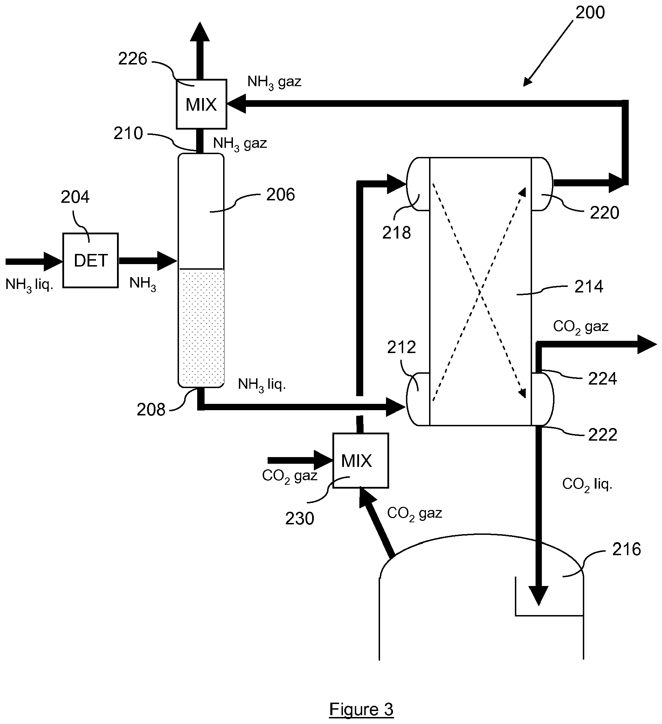

La figure 3 illustre une variante de réalisation de l'appareil 200 de la figure 2 dans le cas particulier où l'échangeur de chaleur 214 est un liquéfacteur de dioxyde de carbone.

Dans le cas d'une telle utilisation, la vapeur montante de dioxyde de carbone de la colonne 216 ne constitue qu'une partie du dioxyde de carbone à condenser, une fraction significative de ce dioxyde de carbone provenant d'une partie d'épuration, non représentée, à une température supérieure à la température d'équilibre liquide/vapeur du dioxyde de carbone.

Cette dernière fraction surchauffée de dioxyde de carbone est généralement introduite en tête de la colonne (figures 1 et 2). Elle se refroidit alors au contact du reflux de dioxyde de carbone liquide provenant du condenseur 214, jusqu'à une température très proche de la température d'équilibre liquide-vapeur. Cette désurchauffe génère alors, par évaporation d'une partie du reflux, un flux de vapeur de dioxyde de carbone complémentaire.

Dans l'appareil de la figure 3, des moyens de mélange 230 sont prévus en amont de l'échangeur 214 pour mélanger le flux de dioxyde de carbone à la vapeur de dioxyde de carbone sortant de la colonne 216, en dehors de celle-ci et sans contact avec le liquide de dioxyde de carbone condensé dans l'échangeur 214.

Le mélange de ces deux flux gazeux de dioxyde de carbone est encore surchauffé à l'entrée de l'échangeur 214, ce qui permet d'augmenter la surchauffe en vapeur de l'ammoniac en sortie de l'échangeur 214.

Ainsi l'échangeur 214 n'a pas de sortie du deuxième fluide sous forme liquide.

## Revendications

1. Procédé de condensation d'un premier fluide à l'aide d'un deuxième fluide comprenant des étapes de :
- séparation de phases pour obtenir une portion liquide (208) et une portion gazeuse (210) dudit deuxième fluide dans un séparateur de phases (206) ; et
- échange de chaleur dans l'échangeur de chaleur (214) entre la portion liquide du deuxième fluide et le premier fluide (218) pour liquéfier le premier fluide au moins partiellement et pour vaporiser entièrement la portion liquide du deuxième fluide,
- mélange de la portion liquide vaporisé avec la portion gazeuse en dehors du séparateur de phases **caractérisé en ce que** le premier fluide contient au moins 50% mol de dioxyde de carbone.

2. Procédé selon la revendication 1 dans lequel la portion liquide du deuxième fluide est chauffée dans l'échangeur de chaleur (214) après sa vaporisation pour former un gaz surchauffé.

3. Procédé selon l'une des revendications précédentes dans lequel le premier fluide provient au moins en partie de la tête d'une colonne de distillation (216) et le premier fluide condensé est renvoyé à la tête de la colonne de distillation.

4. Procédé selon la revendication 3 dans lequel une première fraction gazeuse riche en dioxyde de carbone provenant de la tête de la colonne de distillation (216) est mélangée avec une deuxième fraction gazeuse riche en dioxyde de carbone ne provenant pas de la colonne pour former le premier fluide.

5. Procédé selon l'une quelconque des revendications précédentes, dans lequel le rapport entre le volume total du deuxième fluide dans le séparateur de phases (206) et le débit du deuxième fluide à l'entrée du séparateur de phases est compris entre 0,01 et 0,05 L.h/Nm³.

6. Procédé selon l'une quelconque des revendications précédentes, dans lequel le rapport entre le volume de la portion liquide du deuxième fluide dans le séparateur de phases (206) et le débit du deuxième fluide à l'entrée du séparateur est compris entre 0,005 et 0,03 L.h/Nm³.

7. Procédé selon l'une quelconque des revendications précédentes, dans lequel le rapport entre la capacité de l'échangeur de chaleur (214) et le débit du deuxième fluide à l'entrée du séparateur de phases (206) est compris entre 0,13 et 0,55 L.h/Nm³.

8. Procédé selon l'une quelconque des revendications précédentes dans lequel le deuxième fluide a une composition chimique différente du premier fluide, voire est l'ammoniac.

9. Procédé de distillation d'un gaz riche en dioxyde de carbone dans une colonne (216) où un procédé de condensation selon l'une des revendications précédentes s'opère dans le condenseur de tête (214).

10. Appareil de distillation d'un gaz riche en dioxyde de carbone comprenant :
a : une colonne de distillation (216) alimentée par le gaz riche en dioxyde de carbone et capable de produire en tête un premier fluide contenant au moins 50% mol de dioxyde de carbone,
b : un séparateur de phases (206), pour obtenir une portion liquide et une portion gazeuse d'un deuxième fluide, relié à une conduite de sortie de la portion liquide et à une conduite de sortie de la portion gazeuse, une conduite de sortie de la portion liquide vaporisée étant reliée à la conduite de sortie de la portion gazeuse, sans passer par le séparateur de phases;
c : un échangeur de chaleur (214) pour échanger de la chaleur entre la portion liquide du deuxième fluide et le premier fluide, la tête de la colonne étant reliée à l'échangeur de chaleur par une conduite d'entrée du premier fluide pour y amener au moins une partie d'un premier fluide contenant au moins 50% mol de dioxyde de carbone (200) pour la condensation du premier fluide riche en dioxyde de carbone à l'aide du deuxième fluide, l'échangeur étant relié à la conduite de sortie de la portion liquide, à une conduite d'entrée du premier fluide, à une conduite de sortie du premier fluide condensé et à la conduite de sortie du deuxième fluide vaporisé.

11. Appareil selon la revendication 10 comprenant une première conduite d'amenée d'une première fraction gazeuse riche en dioxyde de carbone provenant de la colonne (216) et une deuxième conduite d'amenée d'une deuxième fraction gazeuse riche en dioxyde de carbone ne provenant pas de la colonne, les première et deuxième conduites étant reliées par des moyens de mélange (230) en dehors de la colonne pour former le premier fluide à envoyer à l'échangeur de chaleur.

## Patentansprüche

1. Verfahren zur Kondensation eines ersten Fluids mithilfe eines zweiten Fluids, umfassend die Schritte:
- Phasentrennung zum Erhalten eines flüssigen Anteils (208) und eines gasförmigen Anteils (210) des zweiten Fluids in einem Phasentrenner (206) und
- Wärmeaustausch in einem Wärmeaustauscher (214) zwischen dem flüssigen Anteil des zweiten Fluids und dem ersten Fluid (218), um das erste Fluid zumindest partiell zu verflüssigen und den flüssigen Anteil des zweiten Fluids vollständig zu verdampfen,
- Mischen des verdampften flüssigen Anteils mit dem gasförmigen Anteil außerhalb des Phasentrenners, **dadurch gekennzeichnet, dass** das erste Fluid mindestens 50 Mol-% Kohlendioxid enthält.

2. Verfahren nach Anspruch 1, wobei der flüssige Anteil des zweiten Fluids nach seiner Verdampfung im Wärmeaustauscher (214) unter Bildung eines überhitzten Gases erhitzt wird.

3. Verfahren nach einem der vorhergehenden Ansprüche, wobei das erste Fluid zumindest zum Teil aus dem Kopf einer Destillationskolonne (216) stammt und das kondensierte erste Fluid wieder in den Kopf der Destillationskolonne eingeleitet wird.

4. Verfahren nach Anspruch 3, wobei eine erste gasförmige kohlendioxidreiche, aus dem Kopf der Destillationskolonne (216) stammende Fraktion mit einer zweiten gasförmigen kohlendioxidreichen Fraktion, die nicht aus der Kolonne stammt, unter Bildung des ersten Fluids gemischt wird.

5. Verfahren nach einem der vorhergehenden Ansprüche, wobei das Verhältnis zwischen dem Gesamtvolumen des zweiten Fluids im Phasentrenner (206) und dem Durchsatz des zweiten Fluids am Einlass des Phasentrenners zwischen 0,01 und 0,05 L.h/Nm³ beträgt.

6. Verfahren nach einem der vorhergehenden Ansprüche, wobei das Verhältnis zwischen dem Volumen des flüssigen Anteils des zweiten Fluids im Phasentrenner (206) und dem Durchsatz des zweiten Fluids am Einlass des Trenners zwischen 0,005 und 0,03 L.h/Nm³ beträgt.

7. Verfahren nach einem der vorhergehenden Ansprüche, wobei das Verhältnis zwischen der Kapazität des Wärmeaustauschers (214) und dem Durchsatz des zweiten Fluids am Einlass des Phasentrenners (206) zwischen 0,13 und 0,55 L.h/Nm³ beträgt.

8. Verfahren nach einem der vorhergehenden Ansprüche, wobei das zweite Fluid eine andere chemische Zusammensetzung als das erste Fluid hat oder sogar Ammoniak ist.

9. Verfahren zur Destillation eines kohlendioxidreichen Gases in einer Kolonne (216) oder Kondensationsverfahren nach einem der vorhergehenden Ansprüche, das im Kopfkondensator (214) erfolgt.

10. Destillationsanlage für ein kohlendioxidreiches Gas, umfassend:
a: eine Destillationskolonne (216), die mit dem kohlendioxidreichen Gas beschickt wird und im Kopf ein erstes Fluid erzeugen kann, das mindestens 50 Mol-% Kohlendioxid enthält,
b: einen Phasentrenner (216) zum Erhalten eines flüssigen Anteils und eines gasförmigen Anteils eines zweiten Fluids, der mit einer Auslassleitung für den flüssigen Anteil und einer Auslassleitung für den gasförmigen Anteil verbunden ist, wobei eine Auslassleitung für den verdampften flüssigen Anteil mit der Auslassleitung für den gasförmigen Anteil verbunden ist, ohne den Phasentrenner zu durchqueren;
c: einen Wärmeaustauscher (214) zum Austauschen von Wärme zwischen dem flüssigen Anteil des zweiten Fluids und dem ersten Fluid, wobei der Kopf der Kolonne mit dem Wärmeaustauscher durch eine Einlassleitung für das erste Fluid verbunden ist, um darin mindestens einen Teil eines ersten, mindestens 50 Mol-% Kohlendioxid enthaltenden Fluids (200) zur Kondensation des ersten kohlendioxidreichen Fluids mithilfe des zweiten Fluids einzubringen, wobei der Austauscher mit der Auslassleitung für den flüssigen Anteil, einer Einlassleitung für das erste Fluid, einer Auslassleitung für das kondensierte erste Fluid und der Auslassleitung für das verdampfte zweite Fluid verbunden ist.

11. Anlage nach Anspruch 10, umfassend eine erste Zuführleitung für eine erste gasförmige kohlendioxidreiche Fraktion, die aus der Kolonne (216) stammt, und eine zweite Zuführleitung für eine zweite gasförmige kohlendioxidreiche Fraktion, die nicht aus der Kolonne stammt, wobei die erste und die zweite Leitung mit Mischmitteln (230) außerhalb der Kolonne zur Erzeugung des ersten Fluids, das zum Wärmeaustauscher geleitet werden soll, verbunden sind.

## Claims

1. Process for condensing a first fluid using a second fluid comprising steps of:
- phase separation in order to obtain a liquid portion (208) and a gaseous portion (210) of said second fluid in a phase separator (206); and
- heat exchange in the heat exchanger (214) between the liquid portion of the second fluid and the first fluid (218) in order to liquefy the first fluid at least partially and in order to entirely vaporize the liquid portion of the second fluid,
- mixing of the vaporized liquid portion with the gaseous portion outside of the phase separator, **characterized in that** the first fluid contains at least 50 mol% of carbon dioxide.

2. Process according to Claim 1, wherein the liquid portion of the second fluid is heated in the heat exchanger (214) after its vaporization in order to form a superheated gas.

3. Process according to either of the preceding claims, wherein the first fluid originates at least partly from the top of a distillation column (216) and the condensed first fluid is sent to the top of the distillation column.

4. Process according to Claim 3, wherein a first gaseous fraction rich in carbon dioxide originating from the top of the distillation column (216) is mixed with a second gaseous fraction rich in carbon dioxide that does not originate from the column in order to form the first fluid.

5. Process according to any one of the preceding claims, wherein the ratio between the total volume of the second fluid in the phase separator (206) and the flow rate of the second fluid at the inlet to the phase separator is between 0.01 and 0.05 L.h/Nm³.

6. Process according to any one of the preceding claims, wherein the ratio between the volume of the liquid portion of the second fluid in the phase separator (206) and the flow rate of the second fluid at the inlet to the separator is between 0.005 and 0.03 L.h/Nm³.

7. Process according to any one of the preceding claims, wherein the ratio between the capacity of the heat exchanger (214) and the flow rate of the second fluid at the inlet to the phase separator (206) is between 0.13 and 0.55 L.h/Nm³.

8. Process according to any one of the preceding claims, wherein the second fluid has a different chemical composition from the first fluid, or even is ammonia.

9. Process for distilling a gas rich in carbon dioxide in a column (216) where a condensation process as described above takes place in the top condenser (214).

10. Device for distilling a gas rich in carbon dioxide comprising:
a: a distillation column (216) fed by the gas rich in carbon dioxide and capable of producing a first fluid containing at least 50 mol% of carbon dioxide,
b: a phase separator (206), in order to obtain a liquid portion and a gaseous portion of a second fluid, connected to an outlet line of the liquid portion and to an outlet line of the gaseous portion, an outlet line of the vaporized liquid portion being connected to the outlet line of the gaseous portion, without passing through the phase separator;
c: a heat exchanger (214) in order to exchange heat between the liquid portion of the second fluid and the first fluid, the top of the column being connected to the heat exchanger by an inlet line of the first fluid in order to introduce thereinto at least one portion of a first fluid containing at least 50 mol% of carbon dioxide (200) for the condensation of the first fluid rich in carbon dioxide using the second fluid, the exchanger being connected to the outlet line of the liquid portion, to an inlet line of the first fluid, to an outlet line of the condensed first fluid and to the outlet line of the vaporized second fluid.

11. Device according to Claim 10, comprising a first feed line of a first gaseous fraction rich in carbon dioxide originating from the column (216) and a second feed line of a second gaseous fraction rich in carbon dioxide that does not originate from the column, the first and second lines being connected by mixing means (230) outside of the column in order to form the first fluid to be sent to the heat exchanger.
